Europäisches Patentamt

European Patent Office

Office européen des brevets

(19)

(11) Publication number: **0 415 437 A2**

# EUROPEAN PATENT APPLICATION

(21) Application number: 90116752.8

(22) Date of filing: 31.08.90

(51) Int. Cl.⁵: **C08L 63/00, C08L 61/06, C08G 59/62**

(30) Priority: 31.08.89 JP 226925/89

(43) Date of publication of application:
06.03.91 Bulletin 91/10

(84) Designated Contracting States:
CH DE FR GB LI NL

(71) Applicant: SUMITOMO CHEMICAL COMPANY, LIMITED
Kitahama 4-chome 5-33
Chuo-ku Osaka 541(JP)

(72) Inventor: Nakajima, Nobuyuki
2-3-621, Ikku-cho
Niihama-shi, Ehime-ken(JP)
Inventor: Kanagawa, Shuichi
6-6, Hoshigoe-cho
Niihama-shi, Ehime-ken(JP)
Inventor: Sakamoto, Hideshi
10-29, Izumiike-cho
Niihama-shi, Ehime-ken(JP)
Inventor: Saito, Noriaki
1-5-234, Wakamizu-cho
Niihama-shi, Ehime-ken(JP)
Inventor: Ikushima, Tadashi
9-29, Takatsu-cho
Niihama-shi, Ehime-ken(JP)

(74) Representative: Vossius & Partner
Siebertstrasse 4 P.O. Box 86 07 67
W-8000 München 86(DE)

(54) Curing agent for epoxy resins.

(57) A curing agent for epoxy resins which agent comprises a polyhydric phenol obtainable by condensating a phenol compound comprising a substituted phenol having at least one hydrophobic substituent on the aromatic ring and a p-hydroxybenzaldehyde compound, which cures an epoxy compound having at least two glycidyl groups in the molecule to give a cured product having balanced heat resistance and moisture resistance.

## CURING AGENT FOR EPOXY RESINS

The present invention relates to a curing agent for epoxy resins. More particularly, the present invention relates to a curing agent for epoxy resins which is widely used in casting, molding, laminating or coating or as an adhesive.

Epoxy resins have various excellent properties such as adhesivity, processability and solvent resistance, and find a wide variety of applications.

With the recent rapid progress of technology, it is highly desired for the epoxy resins to have much higher performances, in particular, heat resistance in various fields.

Methods for improving the heat resistance of the epoxy resin composition include improvement of the epoxy resins themselves and improvement of the curing agent.

As curing agent for the epoxy resins, amine compounds, acid anhydrides or phenol compounds are known.

In general, when an amine compound is used as the curing agent, the cured epoxy resin has poor water resistance, and additionally the amine compound is toxic.

Acid anhydrides have a low curing rate, and the cured epoxy resin has a poor water resistance and adhesivity.

In place of such curing agents, phenol novolaks are used particularly in the molding material field since they have balanced heat resistance and water resistance.

With the recent progress of semiconductor technology, the phenol novolak type curing agent cannot impart a satisfactory heat resistance to the cured epoxy resin in some applications.

For example, as an encapsulant for an electronic device such as an IC, a curing system in which a glycidyl ether of an o-cresol novolak is cured with a phenol novolak is mainly used. Recently,tne degree of integration of the ICs increases and the ICs encapsulated by epoxy resin compositions have been surface-mounted and directly submerged in a solder bath. The epoxy resin compositions for encapsulating electronic devices are desired to have an improved heat resistance.

As a curing agent for epoxy resin which intends to impart a good heat resistance to the cured product, JP-A-198526/1983 discloses tris-(hydroxyphenyl)methane and JP-A-22824/1988 discloses a condensation product of a phenol and salicylaldehyde.

However, in general, as the heat resistance of the cured epoxy resins is increased, their moisture resistance is decreased.

The curing agent disclosed in JP-A-198526/1983 has still an insufficient heat resistance and poor moisture resistance, though the improvement of the heat resistance was intended.

The curing agent disclosed in JP-A-22824/1988 is desired to provide a further improved heat resistance and moisture resistance.

An object of the present invention is to provide a curing agent for epoxy resins,which agent can provide a cured material of epoxy resins having improved heat resistance and moisture resistance that are well balanced.

According to the present invention, there are provided a curing agent for epoxy resins, which agent comprises a polyhydric phenol obtainable by condensating a phenol compound comprising a substituted phenol having at least one hydrophobic substituent on the aromatic ring and a p-hydroxybenzaldehyde compound, and an epoxy resin curable composition comprising said curing agent and an epoxy compound having at least two glycidyl groups in the molecule.

In the present invention, the hydrophobic substituent bonded to the aromatic ring of the substituted phenol may be any one of hydrophobic substituents. Specific examples of the hydrophobic substituents are saturated alkyl groups (e.g. a methyl group, an ethyl group, a propyl group or a butyl group), unsaturated alkyl groups (e.g. a vinyl group, an allyl group or an isopropenyl group), and aryl groups (e.g. a phenyl group or a tolyl group).

The number of the substituent(s) is preferably from 1 to 4.

When the phenol has no substituent, the cured epoxy resin has poor moisture resistance.

When the number of the substituents exceeds four, the condensation reaction with the p-hydroxybenzaldehyde compound may not proceed.

Specific examples of the substituted phenol having at least one hydrophobic group on the aromatic ring are mono-substituted phenols (e.g. o-cresol, m-cresol, p-cresol, ethylphenol, n-propylphenol, isopropylphenol, tert.-butyl-phenol, octylphenol, nonylphenol or phenylphenol), di-substituted phenols (e.g. xylenol, methylpropylphenol, methylbutylphenol, methylhexylphenol, dipropylphenol or dibutylphenol), and tri-substituted phenols (e.g. trimethylphenol) and naphthols (e.g. naphthol or methylnaphthol).

To impart flame retardance to the phenols, a halogen atom such as a chlorine atom and/or a bromine atom may be introduced in the molecule.

The substituted phenols can be used independently or as a mixture thereof. Further, insofar as the properties of the cured epoxy resins such as moisture resistance are not deteriorated, a small amount of an unsubstituted phenol such as phenol, resorcinol, bisphenol A and/or bisphenol F may be used together with the substituted phenols.

The p-hydroxybenzaldehyde compound used herein is intended to mean a hydroxybenzaldehyde in which a hydroxyl group and an aldehyde group are bonded to the para-positions of a benzene ring. The benzene ring may be substituted with at least one other substituent such as an alkoxy group (e.g. a methoxy, ethoxy or butoxy group), an alkyl group (e.g. a methyl, ethyl, propyl or butyl group), or a halogen atom (e.g. a chlorine atom or a bromine atom). Those p-hydroxybenzaldehyde compounds having an alkyl group further improve moisture resistance of the cured material, while those having a halogen atom impart flame retardance to the cured material. Specific examples of the p-hydroxybenzaldehyde compounds are p-hydroxybenzaldehyde or vanillin. They may be used independently or as a mixture thereof.

Insofar as the properties of the cured epoxy resins such as heat resistance and moisture resistance are not deteriorated, a small amount of other compounds such as aldehydes (e.g. formaldehyde, acetaldehyde, crotonaldehyde, acrolein, glyoxal, glutaraldehyde or benzaldehyde) and/or ketones (e.g. acetone, methyl ethyl ketone or methyl isobutyl ketone) may be used together with the p-hydroxybenzaldehydecompound.

The condensation reaction between the substituted phenol having at least one hydrophobic substituent on the aromatic ring and the p-hydroxybenzaldehyde compound can be carried out by a method which is well known for the synthesis of novolaks.

That is, in the presence of an acid catalyst such as an inorganic acid (e.g. hydrochloric acid or sulfuric acid), an organic acid (e.g. toluenesulfonic acid) and/or zinc acetate, the phenol compound and the p-hydroxybenzaldehyde compound are heated.

Through the condensation reaction, a trinuclear compound consisting of two molecules of the phenol compound and one molecule of the p-hydroxybenzaldehyde compound is mainly produced. In addition, an oligomer comprising a repeating unit consisting of a pair of one molecule of the phenol compound and one molecule of the p-hydroxybenzaldehyde compound is produced. In case of the above trinuclear compound, the number of the repeating units is 0 (zero).

As the number of the repeating units increases, the heat resistance of the cured material of the epoxy resins increases although the viscosity of the uncured epoxy resin composition increases. Therefore, the number of the repeating units is selected according to the applications.

When the number of the repeating units is too small, the heat resistance of the cured epoxy resinsis decreased. In view of the heat resistance, the number of the repeating units is preferably at least 0.2 on the average. Preferably, the number of the repeating units does not exceed 5.

To control the number of the repeating units, the ratio of the phenol compound to the p-hydroxybenzaldehyde compound and/or the amount of the catalyst are suitably adjusted. For example, to increase the number of the repeating units, the ratio of the p-hydroxybenzaldehyde compound to the phenol compound is increased and/or the amount of the catalyst is increased.

As the epoxy compound having at least two glycidyl groups which is to be cured with the curing agent of the present invention, any of the known epoxy resins is used.

Specific examples of the epoxy resins are glycidyl ethers of diphenols (e.g. bisphenol A, bisphenol F, bisphenol AD, brominated bisphenol A, resorcinol or hydroquinone); glycidyl ethers of phenol novolaks, cresol novolaks, resorcinol novolaks,trihydroxyphenylmethane, trihydroxyphenylethane, trihydroxyphenylpropane, tetrahydroxyphenylethane, polyvinylphenol or polyisopropenylphenol; glycidyl ethers of polyhydric phenols which are prepared by a condensation reaction of phenols and aromatic carbonyl compounds; glycidyl amines of diaminodiphenylmethane or aminophenol; alicyclic epoxy resins such as vinylcyclohexenedioxide, alicyclic diepoxyacetals or alicyclic epoxy carboxylates;and heterocyclic epoxy resins such as hydantoin type epoxy resins or triglycidyl isocyanurate.

In the composition, the polyhydric phenol type curing agent of the present invention is used in an amount of 0.2 to 1.5 equivalents of the phenolic hydroxyl groups per one glycidyl group.

The curing agent of the present invention can be used as a mixture with other well known curing agents such as phenol novolaks, amine compounds and acid anhydrides. In particular, the mixture with the phenol novolaks has good moldability.

The composition comprising the epoxy resin and the curing agent of the present invention may further contain conventionally used additives such as fillers, curing accelerators, mold release agents, flame retardants or coupling agents.

To encapsulate electronic devices such as semiconductors with a composition comprising the epoxy resin and the curing agent of the present invention, any of the conventional molding methods such as transfer molding, compression molding or injection molding may be employed. In particular, when the epoxy resin composition is in the liquid state, casting, dipping or dropping can be used.

When the epoxy resin composition of the present invention is used in laminates, it is homogeneously dissolved in a solvent (e.g. methyl ethyl ketone, toluene or ethyleneglycolmonomethylether), the resulting solution is impregnated in glass fibers or organic fibers and dried by heating to form a prepreg, and then the prepreg is press molded.

From the epoxy resin composition comprising the specific curing agent of the present invention, a molded article of the cured epoxy resin which has good heat resistance and well balanced properties such as moisture resistance and moldability can be obtained.

The present invention will be illustrated by following Examples.

In Examples, the average number of repeating units was measured and calculated by using a gel permeation chromatograph (TRI ROTAR SR-II manufactured by Nippon Spectro-Industry Co., Ltd.).

Evaluated properties of the cured epoxy resin articles and methods for evaluating them are as follows:

Dynamic viscoelasticity-Glass transition temperature

From a press molded article, a sample piece (3 mm x 27 mm x 0.3 mm) is cut out and subjected to measurement of dynamic vicoelasticity by using Rheolograph Solid (manufactured by Toyo Seiki Seisakusho) and then the glass transition temperature is evaluated.

Water absorption (Pressure cooker test)

From a press molded article, two sample pieces (each 20 mm x 25 mm x 2 mm) are cut out, placed in a high pressure vapor environmental tester (PC-305 S manufactured by Hirayama Seisakusho Co., Ltd.) and heated at 121°C under 2 Atm. for 20 hours. Then, weight gain of the sample is measured and expressed in percentages.

The water absorption is a criterion for evaluating the moisture resistance.

Preparation Examples 1-7 and Comparative Preparation Examples 1 and 2

To a reactor equipped with a thermometer, a stirrer and a condenser, a phenol compound and an aldehyde shown in Table 1 were charged in amounts indicated in Table 1. Then, as a catalyst, 1.0 g p-toluenesulfonic acid monohydrate was added. The mixture was heated at 95° to 105°C while stirring.

After confirming disappearance of p-hydroxybenzaldehyde with GPC (gel permeation chromatography), the reaction mixture was neutralized with a 10 % sodium hydroxide aqueous solution.

After washing the reaction mixture with water five times, the unreacted monomers were evaporated off to obtain a desired polyhydric phenol.

The average number of the repeating units of polyhydric phenol was measured.

The results are shown in Table 1.

4

Table 1

| Preparation Example No. | Phenol compound (g) | Aldehyde (g) | Av. No. of repeating units |
|---|---|---|---|
| 1 | o-Cresol (540) | p-Hydroxybenzaldehyde (61) | 0.2 |
| 2 | m-Cresol (108) | ↑ (61) | 2.5 |
| 3 | ↑ (540) | ↑ (61) | 0.4 |
| 4 | p-Cresol (540) | ↑ (61) | 0.4 |
| 5 | o-Isopropylphenol (540) | ↑ (61) | 0.3 |
| 6 | o-n-Propylphenol (108) | ↑ (61) | 1.9 |
| 7 | p-tert.-Butylphenol (108) | ↑ (61) | 3.3 |
| Comp. Prep. Example 1 | Phenol (470) | ↑ (61) | 0.1 |
| Comp. Prep. Example 2 | o-Cresol (540) | Salicylaldehyde (61) | 0.2 |

Examples 1-7 and Comparative Examples 1 and 2

210 g glycidyl ether of polyphenol which was prepared by condensation of a phenol and hydroxybenzaldehyde (Sumiepoxy (trade mark) ESX-221, an epoxy equivalent of 210) as an epoxy resin, the polyhydric phenol shown in Table 2 as a curing agent and 3.2 g triphenylphosphine as a curing accelerator were heated and compounded on rolls and press molded at 175°C for 5 minutes. Then, the molded article was post cured in an oven at 180°C for 5 hours to obtain a cured molded article.

The glass transition temperature ($T_g$) and the water absorption of the cured molded article were measured.

The results are shown in Table 2.

Table 2

| Example No. | Curing agent | | $T_g$ (°C) | Water Absorption (wt.%) |
|---|---|---|---|---|
| | Kind | Amount (g) | | |
| 1 | Prep. Ex. 1 | 107 | 230 | 1.8 |
| 2 | Prep. Ex. 2 | 107 | 250 | 1.7 |
| 3 | Prep. Ex. 3 | 108 | 245 | 1.8 |
| 4 | Prep. Ex. 4 | 108 | 237 | 1.9 |
| 5 | Prep. Ex. 5 | 125 | 227 | 1.8 |
| 6 | Prep. Ex. 6 | 125 | 232 | 1.7 |
| 7 | Prep. Ex. 7 | 135 | 235 | 1.9 |
| Comp. Ex. 1*) | Comp. Prep. Ex. 1 | 97 | 170 | 2.9 |
| Comp. Ex. 2 | Comp. Prep. Ex. 2 | 107 | 207 | 2.3 |
| Note: | | | | |

*) The cured article was defectively molded, had a granular structure and was nonuniformly cured.

**Claims**

1. A curing agent for epoxy resins which agent comprises a polyhydric phenol obtainable by condensating a phenol compound comprising a substituted phenol having at least one hydrophobic substituent on the aromatic ring and a p-hydroxybenzaldehyde compound.

2. The curing agent for epoxy resins according to claim 1, wherein the polyhydric phenol comprises, on the average, at least 0.2 repeating unit which consists of a pair of one molecule of the phenol compound and one molecule of the p-hydroxybenzaldehyde compound.

3. The curing agent for epoxy resins according to claim 1 or 2, wherein said hydrophobic substituent is a methyl group, an ethyl group, a propyl group, a butyl group, a vinyl group, an allyl group, an isopropenyl group, a phenyl group or a tolyl group.

4. The curing agent for epoxy resins according to any one of claims 1 to 3, wherein the number of said hydrophobic substituent is 1 to 4.

5. An epoxy resin curable composition comprising a curing agent for epoxy resin which agent comprises a polyhydric phenol obtainable by condensating a phenol compound comprising a substituted phenol having at least one hydrophobic substituent on the aromatic ring and a p-hydroxybenzaldehyde compound, and an epoxy compound having at least two glycidyl groups in the molecule.

6. The epoxy resin curable composition according to claim 5, wherein the polyhydric phenol comprises, on the average, at least 0.2 repeating unit which consists of a pair of one molecule of the phenol compound and one molecule of the p-hydroxybenzaldehyde compound.

7. The epoxy resin curable composition according to claim 5, wherein the amount of said curing agent is 0.2 to 1.5 equivalents of the phenolic hydroxyl groups per one glycidyl group.